# EUROPÄISCHE PATENTSCHRIFT

(11) **EP 2 516 213 B1**
(45) Veröffentlichungstag und Bekanntmachung des Hinweises auf die Patenterteilung: **03.06.2015**
(21) Anmeldenummer: 10776362.5
(22) Anmeldetag: 12.11.2010
(51) Int. Cl.: B60R 13/02, B29C 63/04

(54) **VERFAHREN ZUR HERSTELLUNG VON VERKLEIDUNGSTEILEN VON KRAFTFAHRZEUGEN**
METHOD OF MANUFACTURING TRIM PANELS OF MOTOR VEHICLES
PROCÉDÉ DE FABRICATION DE PIÈCES D'HABILLAGE DE VÉHICULES AUTOMOBILES

(30) Priorität: 23.12.2009 DE 102009060338
(43) Veröffentlichungstag der Anmeldung: 31.10.2012
(73) Patentinhaber: Toyota Boshoku Kabushiki Kaisha, Kariya-shi, Aichi 448-8651 (JP)
(72) Erfinder: DYCKERHOFF, Dirk, 82402 Seeshaupt (DE); HIPP, Franz, 82549 Königsdorf (DE); HERZOG, Heiko, 82057 Icking (DE); NIEFENECKER, Horst, 81475 München (DE)
(74) Vertreter: Von Kreisler Selting Werner - Partnerschaft von Patentanwälten und Rechtsanwälten mbB
(86) Internationale Anmeldenummer: PCT/EP2010/067389
(87) Internationale Veröffentlichungsnummer: WO 2011/076483

(56) Entgegenhaltungen:
- EP-A1- 1 820 625
- EP-A2- 2 065 153
- WO-A1-2006/122919
- DE-A1- 19 708 486
- DE-U1- 29 916 377
- JP-A- 4 097 832

## Beschreibung

Gegenstand der Erfindung ist ein Verfahren zur Herstellung von Verkleidungsteilen von Kraftfahrzeugen mit **Kaschierungen der** Sichtfläche aus Echtleder, Kunstleder und/oder Textilien.

Aus EP 2 065 153 A2 ist ein Verfahren zur Herstellung von Verkleidungsteile bekannt, bei denen Leder oder empfindliche Polsterungen auf einen Träger aufgebracht werden. Hierbei werden in einem ersten Schritt ein Weichschaum oder ein Vlies geformt und anschließend mit einem Türverkleidungsträger hinterschäumt und so miteinander verbunden. In weiteren Schritt wird dann die Polsterung oder Kaschieroberfläche hergestellt und der obige Verbund aus Weichschaum und/oder Vlies mit dem Träger hergestellt.

Üblicherweise wird ein derartiges Nähkleid von Hand kaschiert - bei entsprechenden Nachteilen hinsichtlich Kosten, Qualität und Ausschuss. Alternativ werden nur Teil-Komponenten (Armauflage, Brüstung, Kartentasche, etc.) separat kaschiert und anschließend über diverse kostenintensive Füge- und Montage-Schritte zu einer Türverkleidung zusammengesetzt.

Demgegenüber besteht die Aufgabe der vorliegenden Erfindung darin, Verkleidungsteile von Kraftfahrzeugen mit **Kaschierungen der** Sichtfläche aus Echtleder, Kunstleder und/oder Textilien herzustellen, bei denen ein Materialauszug und eine -Verformung der Sichtfläche nicht möglich ist. Erfindungsgemäß besteht die Aufgabe im Wesentlichen darin, das Verfahren zur Herstellung derartiger Verkleidungsteile von Kraftfahrzeugen zu automatisieren (verbessern) und damit kostengünstiger arbeiten zu können bei gleichzeitiger Möglichkeit, Funktions- und Ziernähte exakt positionieren zu können. Zudem soll die Möglichkeit bestehen, über ein mehr-teiliges/-farbiges Nähkleid einen ähnlich hochwertigen Eindruck wie bei einem üblicherweise mehrteiligen Verkleidungsteil zu erzeugen. Es soll die Möglichkeit bestehen, einen einteiligen Träger zu verwenden und so auf Mehrkosten für Fügeverfahren sowie auf Mehrgewicht durch die entsprechenden Materialdopplungen zu verzichten Dementsprechend wird in einer ersten Ausführungsform der vorliegenden Erfindung die vorgenannte Aufgabe gelöst durch ein Verfahren zur Herstellung von Verkleidungsteilen von Kraftfahrzeugen mit **Kaschierungen der** Sichtfläche aus Echtleder, Kunstleder und/oder Textilien, in welchem man
(a) in einem ersten Schritt ein Nähkleid (1) aus verschiedenen Zuschnitten aus Echtleder, Kunstleder und/oder Textilien herstellt,
(b) in einem zweiten Schritt das Nähkleid (1) auf eine Positiv-Form (2) mit der Geometrie eines Verkleidungsträgers (5) aufzieht, dadurch gekennzeichnet, dass man im zweiten Schritt vorhandene Nähte (3a,3b,3c,3d) ausrichtet und durch Unterdruck an der Rückseite des Nähkleides (1) auf der Positiv-Form (2) fixiert,
(c) in einem dritten Schritt die Positiv-Form (2) mit dem Nähkleid (1) in ein Kaschierwerkzeug (4) übergibt,
(d) in einem vierten Schritt die Positiv-Form (2) nach Abschalten des Unterdrucks an der Positiv-Form (2) entfernt und das Nähkleid (1) durch Unterdruck an der Sichtseite im Kaschierwerkzeug (4) fixiert, und
(e) in einem fünften Schritt einen mit einer Klebebeschichtung versehenen Verkleidungsträger (5) mit wenigstens einer damit kongruenten Sicke (6) einsetzt, die mit den Funktions- und/oder Ziernähten (3a,3b,3c,3d) kongruent ist und der Verkleidungsträger (5) mit dem Nähkleid (1) kaschiert, wobei man in einem Zwischenschritt nach dem ersten Schritt und vor dem zweiten Schritt an gewünschten Bereichen an den Innenseiten des Nähkleids (1) Weichinserts aus Schaumstoff und/oder Vlies anbringt.

Die Polsterung des Trägers 5 wird in Form eines sogenannten Nähkleides 1 auf diesen aufgebracht. Dieses Nähkleid 1 umfasst Ziernähte auf der Sichtfläche und Funktionsnähte in den geometrisch komplexen Bereichen (Flanken, Erhöhungen, etc.). Diese Nähte machen eine Kaschierung auf einen komplex geformten Träger 5 mit den Nuten 5a, 5b, 5c und 5d erst möglich, da ein Materialauszug und -Verformung wie bei üblichen Folienkaschierungen, insbesondere mit Leder oder Kunstleder nicht möglich ist.

Erfindungsgemäß wird das komplette Verkleidungsteil mit dem Nähkleid 1 in Echt- oder Kunstleder aber auch in Textilien kaschiert, das heißt aus verschiedenen Zuschnitten mit gegebenenfalls verschiedenen Farben wird eine komplette Leder-, Kunstleder- und/oder Textiloberfläche erstellt und vernäht. Der Begriff "Textilien" umfasst unter anderem auch ein Material mit der Bezeichnung Alcantara^{®}, das heißt eines auf Polyester und Polystyrol basierenden Mikrofaserstoffes, der fälschlicherweise oft als Leder oder Kunstleder bezeichnet wird.

Verkleidungsteile von Kraftfahrzeugen im Sinne der vorliegenden Erfindung umfassen insbesondere Türverkleidungen, Dachsäulen oder Blenden im Bereich der Instrumententafel. Wenn nachfolgend in der Beschreibung der Begriff "Türverkleidung" benutzt wird, so steht dieser synonym für die vorgenannten Verkleidungsteile.

Erfindungsgemäß wird das Nähkleid 1 automatisch über Kaschierwerkzeuge 4 auf dem Träger 5 kaschiert, wo bei der Kantengestaltung eine besondere Funktion zukommt. Während üblicherweise zur Aufnahme der Funktionsnähte Nuten 7 in die Trägerflanken eingebracht werden, kommen anstatt der Nuten erfindungsgemäß Sicken 6 im Bereich des Trägerrandes eine besondere Bedeutung zu.

Die Nuten 7 des Standes der Technik können insbesondere bei Naturfaserträgern nur sehr bedingt eingebracht werden, da hierfür separate Werkzeugschieber erforderlich sind. Zusätzlich sind diese Nuten 7 des Standes der Technik ungeeignet für ein automatisches Kaschieren, da die Nähte seitlich in die Nuten 7 gedrückt werden müssen, was bei einem automatisierten Stempelkaschierverfahren nicht oder nur bedingt möglich ist.

Erfindungsgemäß werden anstelle der Nuten 7 Sicken 6 im Bereich des Trägerrandes eingebracht, die presstechnisch einfach herstellbar sind.

Darüber hinaus kann die Nahtfahne von oben eingedrückt werden, wobei eine seitliche Bewegung nicht erforderlich ist. Der gewichtigste Vorteil der erfindungsgemäß eingebrachten Sicke 6 ist jedoch im Toleranzausgleich zu sehen. Üblicherweise werden Nähkleider und Komplett-Belederungen nur bei Kleinteilen, wie Armauflagen oder Griffen durchgeführt. Bei großen Bauteilen, wie beispielsweise einer Türverkleidung ergeben sich eine Reihe von Problemstellungen, die erfindungsgemäß überwunden werden:
- Der Träger selbst hat Toleranzen (Wuchs-/Schwund).
- Die Zuschnitt-Erstellung beim Leder/Kunstleder und/oder Textilien hat Toleranzen.
- Der Nähprozess hat Toleranzen.
- Oft werden Nähkleider und Träger zusätzlich transportiert, wobei durch unterschiedliche Feuchtigkeitsaufnahme oder Temperaturunterschiede sich die Dimensionen verändern können.

Dies hat im Stand der Technik zur Folge, dass Nähkleid und Träger nicht mehr ideal zusammenpassen, wobei es zu Kaschierproblemen und einem hohen Maß an Ausschuss kommt.

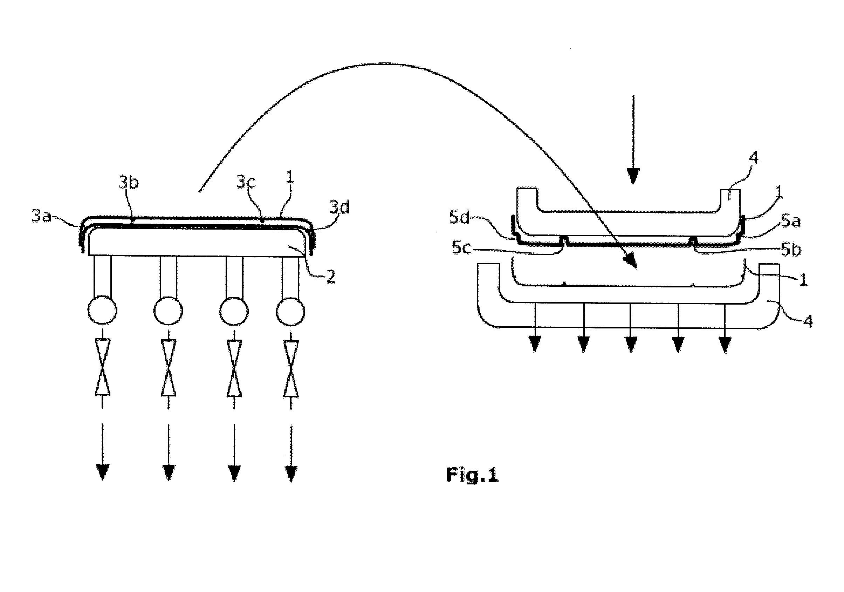

In Fig. 1 wird das erfindungsgemäße Verfahren dargestellt. Das Nähkleid 1, das aus verschiedenen Zuschnitten, gegebenenfalls mit verschiedenen Farben oder Oberflächen aus Echtleder, Kunstleder und/oder Textilien hergestellt ist, wird auf eine Positiv-Form 2 mit der Geometrie eines Türverkleidungsträgers 5 aufgezogen. Dieses wird mit Unterdruck auf eben dieser Positiv-Form 2 fixiert und anschließend die Nähte ausgerichtet.

Unter Beibehaltung des Unterdrucks wird die Positiv-Form 2 mit dem Nähkleid 1 in ein Kaschierwerkzeug 4 übergeben. Nach der Übergabe wird der Unterdruck an der Positiv-Form 2 ausgeschaltet und vorher, gleichzeitig oder im Anschluss daran das Nähkleid 1 durch Unterdruck im Kaschierwerkzeug 4 fixiert. Damit kann das Nähkleid 1 positionsgenau übergeben werden.

In einem weiteren Schritt wird dann der bereits mit Klebstoff beschichtete Träger 5 auf ein Oberwerkzeug gesteckt, gegebenenfalls Vakuum-fixiert und in ein positioniertes Nähkleid 1 per Stempeldruck kaschiert. Alternativ ist es selbstverständlich auch möglich, den Klebstoff nicht auf den Träger 5 aufzubringen, sondern auf die Rückseite des Nähkleides 1. Alternativ hierzu ist es darüber hinaus auch möglich, beide miteinander zu verklebenden Oberflächen jeweils mit Kleber zu beschichten.

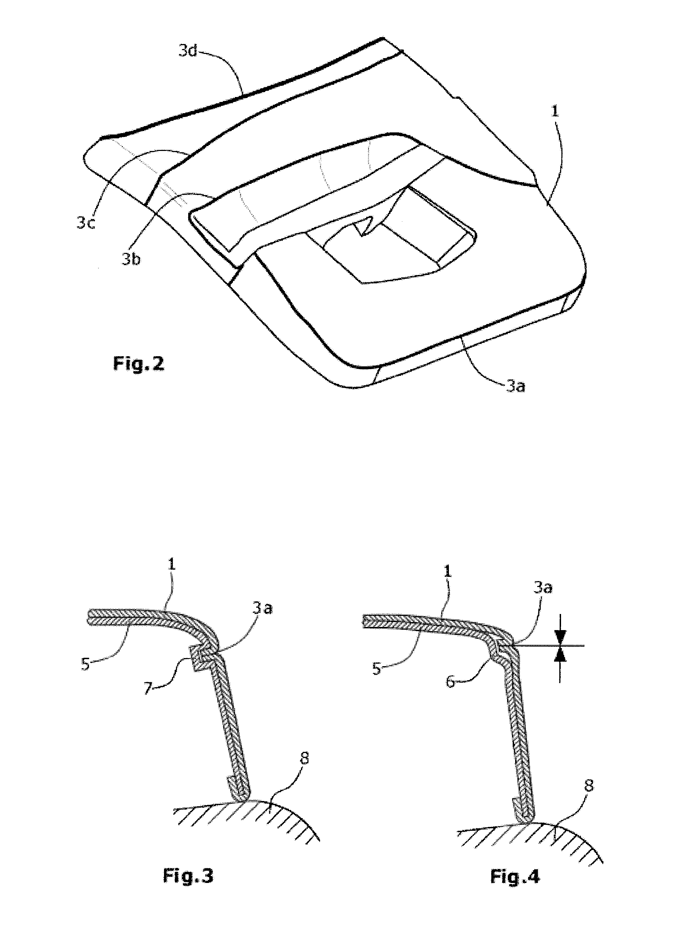

In Fig. 2 ist eine Draufsicht auf eine Türverkleidung 5 dargestellt, bei der die Funktionsnähte 3a, 3b, 3c, 3d und Ziernähte besonders hervorgehoben sind.

Erfindungsgemäß wird somit ein kompletter Türverkleidungsträger 5 mit einem Nähkleid 1 in Echtleder, Kunstleder oder Textilien kaschiert. Gegebenenfalls ist es selbstverständlich in einem Zwischenschritt möglich, gewünschte Bereiche an den Innenseiten des Nähkleids 1 mit WeichInserts aus Schaumstoff und/oder Vlies zu versehen. Durch diese Unterfütterung wird die Oberfläche zur optimalen Haptik weich mit dem Schaum oder Vlies unterfüttert. Erfindungsgemäß ist es somit möglich, auf eine großflächige oder ganzflächige Unterfütterung mit Schaum oder Vlies zu verzichten.

In Fig. 3 wird eine konventionelle Kantengestaltung bei belederten Türkleidungsträger 5 dargestellt. Die Funktionsnaht 3a liegt in einer Nut 7, muss hier jedoch durch Einwirkung von seitlichen Schiebern exakt eingebracht werden. Dieses Verfahren ist besonders aufwendig.

In Fig. 4 wird eine erfindungsgemäße Kantengestaltung für die automatische Kaschierung mit einer Möglichkeit zum Toleranzausgleich dargestellt. Die Funktionsnaht 3a, bzw. deren Nahtfahne liegt hier in einer Sicke 6 des Trägers 5 im Bereich des Übergangs der Sichtfläche zur Abstellkante der Türverkleidung 5 hin zum Türblech 8. Die Position der Nahtfahne kann nach oben oder unten verschoben werden, um hier eine optimale Anpassung zu erreichen.

Auch wenn es erfindungsgemäß nicht erforderlich ist, die gesamte rückwärtige Fläche des Nähkleides 1 mit einem vollflächigen Schaum und/oder Vlies zu versehen, so ist dies dennoch ohne weiteres möglich, wenn man das Nähkleid insbesondere vor der Fixierung auf der Positiv-Form 2 des Türverkleidungsträgers 5 mit eben diesem Schaum und/oder dem Vlies versieht. Alternativ ist es selbstverständlich auch möglich, dass das bereits im Kaschierwerkzeug 4 fixierte Nähkleid 1 vor der Verklebung mit dem Träger 5 oder auch diesen selbst mit einer entsprechenden vollständigen Schaum- oder Vliesrückseite zu versehen.

Erfindungsgemäß kann somit ein zu großes oder zu kleines Nähkleid 1 im Bereich der Sicke 6/Funktionsnaht 3a nach oben oder unten verschoben werden, ohne dass sich Beulen, Falten oder sonstige optische Beeinträchtigungen ergeben. Um zu verhindern, dass es an den Flanken zu Kaschierproblemen kommt, beispielsweise bei einem zu geringen Druck im Werkzeug 4 und damit zu geringem Kaschierdruck und folglich schlechter Verklebung, werden im Werkzeug 4 gegebenenfalls die seitlichen Flanken mittels verfahrbarer Werkzeugschieber angedrückt und somit eine optimale Toleranz-unabhängige Verklebung erreicht. Dieser Einsatz von seitlich verfahrbaren Werkzeugschiebern ist jedoch erfindungsgemäß üblicherweise nicht erforderlich.

Durch die konvexe Geometrie im Bereich der Sicke 6 überspannt das Nähkleid 1 die "Hohlstellen", und es lassen sich optimale Oberflächen ohne Beulen oder Einfallstellen erzeugen.

Eine Türverkleidung wird in den meisten Fällen in zwei oder mehr Varianten angeboten - Kunstleder einerseits und Echtleder andererseits. Da die Nähkleider in ein Kaschierwerkzeug eingelegt und automatisiert kaschiert werden, ist es erforderlich, dass sowohl Kunst- als auch EchtLeder nahezu identische Material-Dicken aufweisen, da ansonsten die Kaschierdrücke variieren und Haftungsprobleme/Faltenbildung etc. auftreten würden. Läßt sich dies nicht realisieren, müsste je Variante ein eigenes Werkzeug gebaut werden, was die Investitionskosten nach oben treiben würde.

Ein Kunstleder ist in der Regel wie folgt aufgebaut: Deckschicht aus PVC oder PUR und dahinter ein Gewirke, was zumeist gleich bei der Herstellung einlaminiert wird (dieses Gewirke bewirkt, dass beim Nähen die Löcher nicht ausreißen). Zusätzlich kann für weiche Haptik ein PP/PE oder PUR-Schaum direkt auflaminiert werden. Dieser Materialaufbau hat in der Regel eine Dicke von 1,5-2,5 mm, kann aber natürlich beliebig variiert werden.

Echtleder-Häute haben in der Regel eine Dicke von min 0,8 - max 1,3 mm. Sie sind damit zumeist deutlich dünner als Kunstleder-Aufbauten und damit problematisch hinsichtlich der Ausfüllung eines Werkzeugspaltes, der für beide Oberflächen-Varianten passend sein soll.

Dementsprechend besteht eine besondere Ausführungsform der Erfindung darin, Echtleder-Häute mit einem Schaumrücken auszustatten und diese dann im erfindungsgemäßen Verfahren mit dem Träger zu verkleben. Diese Ausrüstung hat weiterhin den Vorteil, dass die Oberfläche eine bessere Haptik aufweist und zusätzlich Unebenheiten, die vom Naturfaser-Träger oder vom Kleber-Auftrag herrühren können etwas egalisiert werden. Zusätzlich ist Naturleder an sich kein homogenes Gebilde mit definierter Wandstärke, vielmehr weist die Oberfläche eine gewisse dreidimensionale Welligkeit auf, die beim Aufkaschieren auf geometrisch geformte Träger zu unruhigen Oberflächen insbesondere an Kanten- und Umbug-Bereichen führen kann. Eine rückseitige Schaum-Kaschierung reduziert diesen Effekt deutlich.

Eine Schaumausrüstung bei Echtleder gibt es in der Form nicht am Markt, da Echtleder in der Regel entweder direkt mit PUR automatisiert hinterschäumt wird (was aber die Oberflächen-Wertigkeit reduziert, da das Leder dann fest mit dem in der Regel prozeßtechnisch bedingt sehr steifen Schäumen verklebt ist, was dazu führt, dass der gewünschte "Schubeffekt" - Verschieben des Leders beim Berühren in einem gewissen Bereich nicht mehr möglich ist) oder manuell auf vorher mit Vliesen oder sogenannten Charmeusen kaschierte Träger kaschiert wird. Oft wird Leder auch nur an den Nähten verklebt und die Flächen nur überspannt, um maximale Schubeffekte zu erzielen.

Die erfindungsgemäße Kaschierung eines PP/PE oder PUR-Schaums auf ein Naturleder offenbarte im Laufe der Entwicklung einige Herausforderungen. So kann Leder nicht einfach wie bei Folienwerkstoffen üblich von der Rolle kaschiert werden, weil als Ausgangsprodukt natürlich nur Zuschnitte, d. h. Häute oder Stanzlinge vorliegen.

Erfindungsgemäß gestaltet sich der Ablauf des Verfahrens wie folgt:
Die Lederhäute werden auf Lederfehler geprüft (Mückenstiche, Stacheldrahtverletzungen etc.), nach Lederqualitätszonen gekennzeichnet und Zuschnitte anschließend per Lasercutter oder mittels Stanzmessern erstellt. Diese Zuschnitte sind hier zunächst Grobzuschnitte und werden nach der Schaumkaschierung nochmals feingestanzt.

Anschließend werden die Zuschnitte in sogenannten Flachbett-Pressen mit dem vorher erstellten Schaumzuschnitt (mit Dispersions-/Hotmelt- oder Lösungsmittel-Kleber vorher ausgerüstet) über Druck und Temperatur kaschiert. Anschließend werden diese Zuschnitte feingestanzt und zu einem kompletten Nähkleid vernäht. Teilweise muss vor dem Nähen der Zuschnitt an den Randbereichen "geschärft" werden (d.h. den Materialaufbau im Bereich der Naht verjüngen, um Aufwellungen des Nahtbereichs zu vermeiden).

In der Detail-Ausführung ergeben sich jedoch besondere Herausforderungen:
Leder ist ein Naturprodukt, abhängig von der Zone am Tier hat Leder sehr unterschiedliche Dehnungen und Material-Härten. Beim Verformen von Leder über eine Bauteil-Geometrie ist es aber wichtig, dass sich auch die Rückseite des Leders relativ bewegen kann. Durch die erfindungsgemäße vollflächige Schaumkaschierung ist dies sehr eingeschränkt möglich. Die Folge: Leder zeigt entweder nach der Schaumkaschierung oder beim späteren Nähkleidkaschieren bestimmte Oberflächenfehler durch Faltenbildung (oder auch Losnarbigkeit des Leders genannt), die ungewünscht sind und zu extrem kostenintensiven Ausschuss führen. Verwendet man jedoch A-Zonen-Leder aus dem sogenannten Kern-Bereich ist dieser Effekt deutlich geringer, da die Lederhäute hier eine höhere Qualität aufweisen ,was sich auf die spezifischen Materialeigenschaften auswirkt; allerdings erhöht das die Material-Kosten um ein Vielfaches. Eine Lösung für dieses Problem besteht darin, eine Schaumtype mit entsprechender Dehnfähigkeit einzusetzen, die trotz der vollflächigen Verklebung einen gewissen Bewegungsspielraum für den Verbund zulässt und Oberflächenfehler am fertigen Bauteil vermeidet. Erfindungsgemäß wird daher vorzugsweise ein Polypropylen/Polyethylen oder Polyurethanschaum insbesondere mit einer Shore-Härte L/C 45 - 55 eingesetzt.

Eine alternative Lösung besteht auch in einem Nadeln oder Schlitzen des Schaumes nach einem bestimmten Muster vor dem Kaschieren - die Hohlstellen bewirken dann auch eine gewisse "Bewegungsfähigkeit".

Eine weitere Ausführungsform besteht in Verkleidungsteilen von Kraftfahrzeugen mit **Kaschierungen der** Sichtfläche aus Echtleder, Kunstleder und/oder Textilien, erhältlich nach einem der Patentansprüche 1 bis 6 umfassend einen Verkleidungsträger (5) und eine Sichtoberfläche eines Nähkleides (1) aus Leder, Kunstleder und/oder Textilien, die neben Ziernähten (3d) auch wenigstens eine oder mehrere Funktionsnähte (3a,3b,3c) aufweist,
die dadurch gekennzeichnet sind, dass
sich die Rückseiten der Funktionsnähte (3a,3b,3c) passgenau in wenigstens einer randumlaufenden Sicke (6) im Bereich des Übergangs von der Sichtfläche zur Abstellkante hin zum Türblech (8) befinden.

Alternativ zu dem vorgenannten Verfahren ist es auch möglich, anstelle des Stempeldruckverfahrens den Unterdruck durch Schlauchfolien oder Schlauchtücher zu erzeugen.

Darüber hinaus besteht eine weitere Ausführungsform in der Bereitstellung von Verkleidungsteilen von Kraftfahrzeugen mit Kaschierungen der Sichtfläche aus Echtleder, umfassend einen Verkleidungsträger (5) und eine schaumstoffkaschierte Sichtoberfläche eines Nähkleides (1) aus Echtleder. Besonders bevorzugt wird dabei ein mit handelsüblichem Kleber versehener Schaumstoffzuschnitt aus Polypropylen/Polyethylen oder Polyurethan eingesetzt.

## Patentansprüche

1. Verfahren zur Herstellung von Verkleidungsteilen von Kraftfahrzeugen mit **Kaschierungen der** Sichtfläche aus Echtleder, Kunstleder und/oder Textilien, in welchem man
(a) in einem ersten Schritt ein Nähkleid (1) aus verschiedenen Zuschnitten aus Echtleder, Kunstleder und/oder Textilien herstellt,
(b) in einem zweiten Schritt das Nähkleid (1) auf eine Positiv-Form (2) mit der Geometrie eines Verkleidungsträgers (5) aufzieht, wobei man im zweiten Schritt vorhandene Nähte (3a,3b,3c,3d) ausrichtet und durch Unterdruck an der Rückseite des Nähkleides (1) auf der Positiv-Form (2) fixiert,
(c) in einem dritten Schritt die Positiv-Form (2) mit dem Nähkleid (1) in ein Kaschierwerkzeug (4) übergibt,
(d) in einem vierten Schritt die Positiv-Form (2) nach Abschalten des Unterdrucks an der Positiv-Form (2) entfernt und das Nähkleid (1) durch Unterdruck an der Sichtseite im Kaschierwerkzeug (4) fixiert, und
(e) in einem fünften Schritt einen mit einer Klebebeschichtung versehenen Verkleidungsträger (5) mit wenigstens einer damit kongruenten Sicke (6) einsetzt, die mit den Funktions- und/oder Ziernähten (3a,3b,3c,3d) kongruent ist und den Verkleidungsträger (5) mit dem Nähkleid (1) kaschiert, wobei man in einem Zwischenschritt nach dem ersten Schritt und vor dem zweiten Schritt an gewünschten Bereichen an den Innenseiten des Nähkleids (1) Weichinserts aus Schaumstoff und/oder Vlies anbringt.

2. Verfahren nach Anspruch 1, **dadurch gekennzeichnet, dass** man die Zuschnitte mit verschiedenen Farben herstellt.

3. Verfahren nach Anspruch 1 mit einer Sichtfläche aus Echtleder, **dadurch gekennzeichnet, dass** man einen Lederzuschnitt mit einem Schaumstoffzuschnitt kaschiert, der insbesondere Polypropylen/Polyethylen oder Polyurethan enthält.

4. Verfahren nach Anspruch 1, **dadurch gekennzeichnet, dass** sich eine randumlaufende Sicke (6) im Bereich des Übergangs von der Sichtfläche zur Abstellkante des Verkleidungsteils (5) hin zum Türblech (8) befindet.

5. Verfahren nach einem der Ansprüche 1 bis 4, **dadurch gekennzeichnet, dass** die Kaschierung mittels Stempeldruck durchgeführt wird.

6. Verfahren nach einem der Ansprüche 1 bis 5, **dadurch gekennzeichnet, dass** man ein Nähkleid (1) einsetzt, dessen Kaschierrückseite mit einem vollflächigen Schaum und/oder Vlies versehen ist.

## Claims

1. A process for producing trim panels of motor vehicles with laminations on the visible surface made of real leather, artificial leather and/or textiles, wherein
(a) in a first step, a pre-sewn cover (1) is prepared from different blanks made of real leather, artificial leather and/or textiles;
(b) in a second step, the pre-sewn cover (1) is mounted onto a positive mold (2) having the geometry of a trim support (5);
wherein, in the second step, existing seams (3a, 3b, 3c, 3d) are adjusted and fixed on said positive mold (2) by applying reduced pressure on the backside of the pre-sewn cover (1);
(c) in a third step, said positive mold (2) with said pre-sewn cover (1) is transferred into a laminating mold (4);
(d) in a fourth step, said positive mold (2) is removed after the reduced pressure on the positive mold (2) has been switched off, and said pre-sewn cover (1) is fixed within the laminating mold (4) by reduced pressure on the visible side; and
(e) in a fifth step, a trim support (5) provided with an adhesive coating with at least one bead (6) congruent thereto that is congruent to the functional and/or ornamental seams (3a, 3b, 3c, 3d) is employed, and said trim support (5) is laminated with said pre-sewn cover (1), wherein soft inserts made of foam and/or non-woven are provided in desired regions on the inner sides of the pre-sewn cover (1) in an intermediate step after the first step and before the second step.

2. The process according to claim 1, **characterized in that** the blanks are prepared with different colors.

3. The process according to claim 1 with a visible surface made of real leather, **characterized in that** a leather blank is laminated with a foam blank containing, in particular, polypropylene/polyethylene or polyurethane.

4. The process according to claim 1, **characterized in that** there is a circumferential bead (6) in the region of transition from the visible surface to the standing edge of the trim part (5) towards the door panel (8).

5. The process according to any of claims 1 to 4, **characterized in that** the lamination is effected by means of punch pressure.

6. The process according to any of claims 1 to 5, **characterized in that** a pre-sewn cover (1) is employed whose laminated backside is provided with a full-area foam and/or non-woven.

## Revendications

1. Procédé pour préparer des pièces de garniture pour véhicules à moteur comprenant des couches stratifiées sur les surfaces visibles en cuir véritable, cuir artificiel et/ou textiles, dans lequel
(a) dans une première étape, une couverture cousue (1) est préparée à partir de différentes découpes en cuir véritable, cuir artificiel et/ou textiles,
(b) dans une deuxième étape, ladite couverture cousue (1) est montée sur un moule positif (2) avec la géométrie d'un support de garniture (5), dans lequel des coutures (3a, 3b, 3c, 3d) présentes dans la deuxième étape sont orientées et fixées par pression réduite sur le dos de la couverture cousue (1) sur le moule positif (2),
(c) dans une troisième étape, ledit moule positif (2) avec la couverture cousue (1) est transféré dans un moule de stratification (4),
(d) dans une quatrième étape, ledit moule positif (2), après la pression réduite au moule positif (2) a été coupée, est éliminé, et la couverture cousue (1) est fixée à la surface visible dans le moule de stratification (4) par pression réduite, et
(e) dans une cinquième étape, un support de garniture (5) procuré avec un revêtement adhésif ayant un cordon (6) congruent avec lui, qui est congruent avec les coutures fonctionnelles et/ou décoratives (3a, 3b, 3c, 3d), est employé, et ledit support de garniture (5) est stratifié avec ladite couverture cousue (1),
dans lequel, dans une étape intermédiaire après la première étape et avant la deuxième étape, des inserts souples en mousse et/ou en non-tissé sont appliqués dans des régions désirées sur les côtés intérieurs de la couverture cousue (1).

2. Procédé selon la revendication 1, **caractérisé en ce que** les découpes sont préparées avec de différentes couleurs.

3. Procédé selon la revendication 1 avec une surface visible en cuir véritable, **caractérisé en ce qu'**une découpe en cuir est stratifiée avec une découpe en mousse, contenant notamment du polypropylène/polyéthylène ou du polyuréthane.

4. Procédé selon la revendication 1, **caractérisé en ce qu'**un cordon circonférentiel (6) est présent dans la région de transition de la surface visible au bord reposant de la pièce de garniture (5) vers le panneau de porte (8).

5. Procédé selon l'une quelconque des revendications 1 à 4, **caractérisé en ce que** la stratification est effectuée par force de serrage.

6. Procédé selon l'une quelconque des revendications 1 à 5, **caractérisé en ce qu'**une couverture cousue (1) dont le dos de stratification est procuré d'une mousse et/ou d'un non-tissé couvrant la surface entière est employée.
